# EUROPEAN PATENT APPLICATION

(11) **EP 4 741 599 A1**
(43) Date of publication of application: **13.05.2026**
(21) Application number: 25210654.7
(22) Date of filing: 23.10.2025
(51) Int. Cl.: E04D 13/12, E04G 21/32, F24S 25/60, F24S 25/61, H02S 20/23

(54) **FASTENING BRACKET**

(30) Priority: 07.11.2024 FI 20246316
(71) Applicant: VILPE Oy, 65610 Mustasaari (FI)
(72) Inventor: LAHTI, Veli-Pekka, 65610 Mustasaari (FI)
(74) Representative: Laine IP Oy

(57) **Abstract**

According to an example aspect of the present invention, there is provided a bracket for attaching equipment on a roof, comprising a plate (1) having a first surface (3) and a second surface (4), a body (2) placed on the second surface (4) and extending from it and having a top face (5), the body (2) having a cavity (6) within. The first surface (3) of the plate (1) forms a planar face (12) facing in opposite direction to the second surface (4). The body (2) comprises a sleeve (11) having a hole (7) within. The hole (7) extends from the top face (5) of the body (2) into the cavity (6) of the body (2) within the sleeve (11). There is a first contact surface (8) around the hole (7) on the top face (5) of the body (2) and a second contact surface (9) around the hole (7) on an end surface of the sleeve (11) placed in the cavity (6) of the body (2). At least one reinforcement brace (15) is provided extending from the inner face of the cavity (6) of the body (2) to the sleeve (11).

## Description

### FIELD

The invention relates to installing various equipment and devices on a roof. In particular, the invention relates to installing equipment on a roof covered with a roofing felt.

### BACKGROUND

Increasing use of solar panels is leading to increasing use of roof space. Also, other installations on roof are used for various purposes, for example catwalks, cable ways, antennae, cameras and such. This increases demand of reliable fastening methods for providing such installations. As the main function of a roof is to prevent entering of water in the space under the roof, no installation or fastening means may endanger water tightness of the roof surface even under prolonged use under stress. Any penetrating fasteners have to be sealed, the structure has to be sturdy enough to withstand stresses and forces caused by wind, ice, snow, and water on the structures fastened on the roof by fastening brackets or other fastening means. One method is to use penetrating bolts or screws for fixing brackets on the frame or girders of the roof. As the frame is under the surface of the roof that provides the shield against water, such as a roofing sheet or roofing felt, that surface has to be penetrated for fixing to the girders. The penetration makes a hole in the surface and has to be sealed to prevent leaks. However, the installation and sealing work has to be done carefully without endangering water tightness of the roof surface. Another risk related penetrating installations is movement of the fixing elements caused by the forces on the elements installed on the roof. For example, wind loads on solar panels cause long-term movement that may loosen the fixing elements and seals causing leaks on the roof.

Some examples of fastening brackets are disclosed in WO 2009095274, US 5217191 and SE 520398.

Installing any structures on a roof is demanding work that has to be planned and performed carefully. The work takes time may and may require using expensive special parts. All parts used have to withstand harsh conditions on the roof for a long time of use.

### SUMMARY OF THE INVENTION

The invention is defined by the features of the independent claim. Some specific embodiments are defined in the dependent claims.

According to a first aspect of the present invention, there is provided a bracket for attaching equipment on a roof, comprising:
- a plate having a first surface and a second surface;
- a body placed on the second surface and extending from it and having a top face;
- the body has a cavity within;
- the first surface of the plate forms a planar face facing in opposite direction to the second surface;
- the body comprises a sleeve having a hole within, the hole extending from the top face of the body into the cavity of the body within the sleeve;
- a first contact surface around the hole on the top face of the body;
- a second contact surface around the hole on an end surface of the sleeve placed in the cavity of the body; and
- at least one reinforcement brace extending from the inner face of the cavity of the body to the sleeve.

According to a second aspect of the present invention, there is provided a reinforcement brace structure comprising several braces.

According to a third aspect of the invention, the cavity of the body opens on the planar face to provide access inside the cavity.

According to a fourth aspect of the invention, the bracket comprises at least two sleeves and the reinforcement brace structure is configured to extend between the sleeves.

According to a fifth aspect of the invention, the brace structure is configured to form a support point on the level of the planar face.

According to a sixth aspect of the invention, the bracket comprises a mounting bolt having an anchoring end and a thread on the end opposite to the anchoring end, wherein the mounting bolt is configured to extend through the hole in the sleeve and has a first support nut configured to be set against the first contact surface and a second support nut configured to be set against the second contact surface.

According to a seventh aspect of the invention, the bracket comprises a fixture configured to be mounted on the mounting bolts to support equipment and devices, such as solar panels.

According to an eighth aspect of the invention, the anchoring end of the mounting bolt comprises a thread configured for fixing the mounting bolt to an anchor.

According to a ninth aspect of the invention, the planar face is covered with a felt permanently fixed thereto.

### BRIEF DESCRIPTION OF THE DRAWINGS

FIGURE 1 illustrates in a side view a bracket in accordance with at least some embodiments of the present invention;
FIGURE 2 is a cross section A - A of the bracket in FIGURE 1;
FIGURE 3 shows the bracket of FIGURE 1 in a top view;
FIGURE 4 is a bottom view of the bracket in FIGURE 1;
FIGURE 5 is a perspective view of the bracket in FIGURE 1;
FIGURE 6 shows the bracket of FIGURE 1 mounted on a roof.

### EMBODIMENTS

### DEFINITIONS

In the present context, the term "roofing felt" comprises roofing and waterproofing materials made of fibrous body and at least one waterproofing additive acting also as adhesive. The adhesive material is often based on bitumen. The fibrous component is either organic or inorganic fibre or mixtures thereof.

The noun roof is considered to include roofs as such or any mostly flat covering structure.

The bracket described herein is for making attachment base for various equipment that may be installed on a roof. These are, for example, solar panels, catwalks, cable trays, antennae or similar equipment placed of a roof. The bracket includes a flat planar surface for placement on a roof surface, especially on a roof covered with a roofing felt. A body extends from the plate forming the planar surface in order to distance a fastener mounted on the body away from the roof surface for providing a mounting point for equipment to be installed.

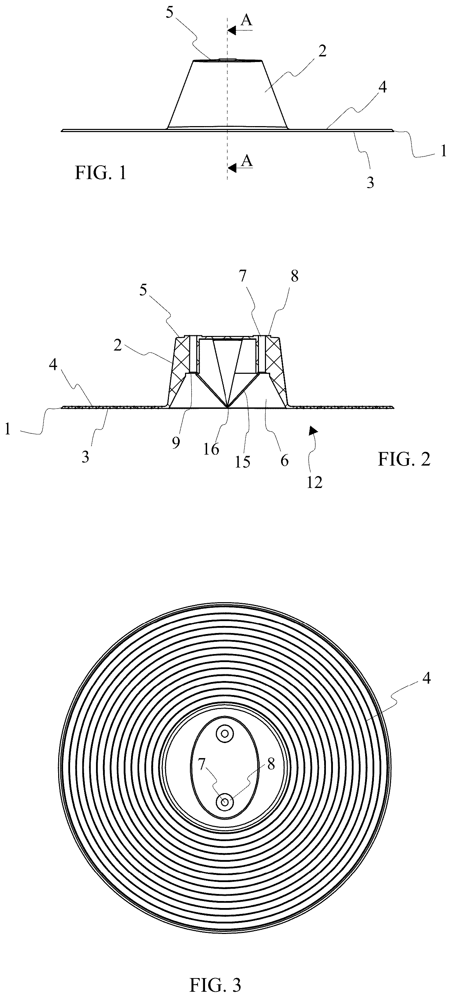

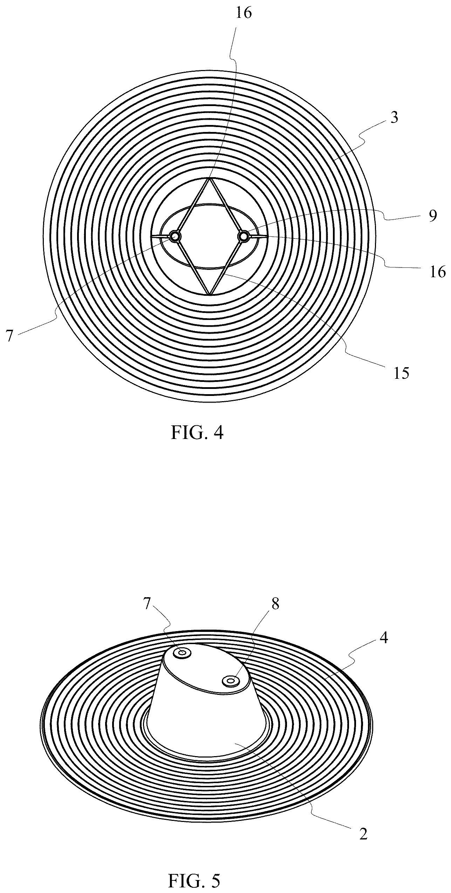

FIGURES 1 - 5 illustrate a bracket in accordance with at least some embodiments of the present invention. The bracket comprises a plate 1 having a first surface 3 and a second surface 4. The plate 1 is circular having said first and second surface 3, 4 facing back-to-back to opposite directions. The surfaces 3, 4 are herein ribbed for enhancing attachment of felt material on them. The actual shape of the plate may vary from circular, it may be square or oval, for example, and the ribbing may be omitted or replaced with another pattern. A body 2 is formed on the second surface 4 and extends from it. In this example, the body 2 has a shape of a sideways-extended oval cross section with angled slopes rising from the second surface 4. The slopes end up to a flat peak forming a top face 5. On the top face 5 are two holes 7. Around the holes 7 are first contact surfaces 8.

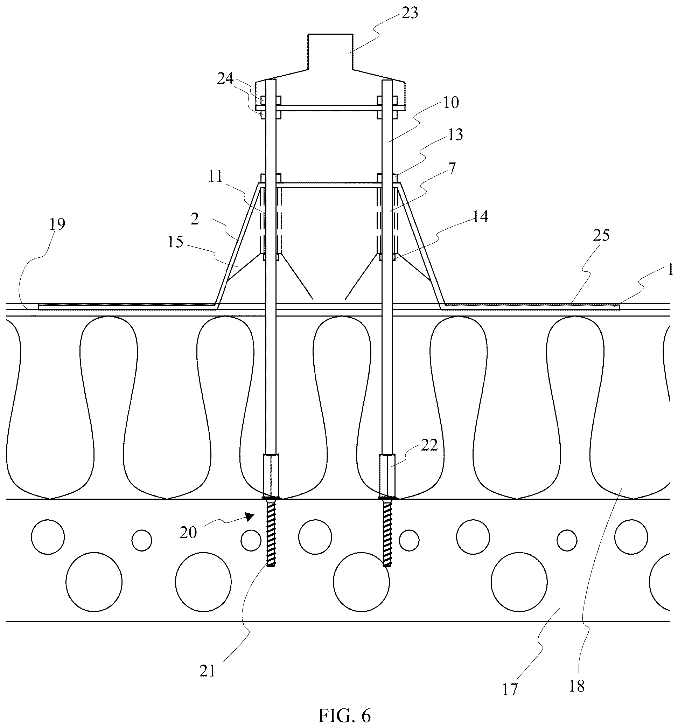

The body 2 has a cavity 6 within. The body 2 forms a shell enveloping the cavity 6. The cavity 6 opens to the first surface 3 and the first surface 3 forms a rim around the opening of the cavity 6. The opening of the cavity 6 provides access inside the cavity 6. This enables mounting of bolts 10 through the opening (see FIGURE 6). On the side facing the cavity 6, the body 2 has sleeves 11 for bolts. The sleeves 11 open as holes 7 in the top face 5 so that the stems of the bolts 10 are set through the holes 7. The sleeves 11 provide a support for bolts 10 and on the other hand the bolts 10 prevent tilting of the bracket sideways.

The first surface 3 of the plate 1 forms a planar face 12 facing in opposite direction to the second surface 4. The opening of the cavity 6 forms a hole on this planar face 12. The sleeves 11 extend inside the cavity 6. The length of the sleeves 11 may vary. Longer the sleeves, the better support the bolts 10 provide in sideways direction to the bracket. At the end of the sleeves 11 that is within the cavity and opposite to the first contact surfaces are second contact surfaces 9. The maximum length of the sleeves 11 is limited so that the distance between the second contact surface 9 to the planar face has to be longer that thickness of second support nut 14 placed against the second contact surface 9.

The sleeves 11 are connected to the inner surface of the body 2 and possibly to each other, like in this example, by braces 15. These braces 15 are bracing ribs that extend, in this example, between the body and the sleeves 11. In this case, each sleeve 11 has three braces 15. Each of he braces 15 extend from the end of the sleeve 1, i.e., from the second contact surface 9 to the edge of the opening in the first surface 3, forming a support point 16. The braces 15 support both the body 2 and the sleeves 11. In this way a lightweight construction is formed that is capable of withstanding high stresses compared to its weight. Further, the construction provides high rigidity in relation to the amount of material needed. Savings in the amount of material makes it possible to production cost in reasonable level. The number, design and placement of eh braces may vary.

In FIGURE 6 the bracket is shown as a complete support structure with anchoring to a main body of a building. The main usage of the bracket is as a support for solar panels mounted on the roof. In roof mounting the bracket is anchored to the load bearing structures of the roof. In FIGURE 6 the load bearing structure is a hollow core slab 17 made of concrete. Obviously, the bracket can be anchored to any structural body providing a reliable mounting point. On top of the hollow core slab 17 is a thermal insulation layer 18 and the top layer of the roof is formed of roofing felt 19. The roofing felt 19 forms the weather resistant layer of the roof. The thermal insulation layer 18 between the hollow core slab 17 and the roofing felt 19 is usually somewhat compressible. Therefore, the structure made of the thermal insulation layer 18 and the roofing felt 19 can't support heavy loads without damage. The bracket described herein provides a way to install equipment like solar panels on such a roof. The bracket is anchored to the structural body, the hollow core slab 17, by mounting bolts 10 and anchors 20. In this example, the anchors comprise a fixing screw 21 for fixing the anchor to the hollow core slab 17 at one end and a threaded socket 22 at the opposite and for receiving a mounting bolt 10. This is only one example of suitable anchors. Several alternatives can be found in the construction industry and even the ends of the mounting bolts 10 can be used as anchors, for example by screwing them into a structure or casting the ends of the mounting bolts directly into concrete.

The bracket of FIGURE 6 is mounted and assembled on a roof by attaching the anchors 20 first on the support structure, the hollow core slab 17. The anchors 20 can be pre-mounted or fastened through the roofing felt 19 and the thermal insulation layer 18 on an existing roof. Next, the mounting bolts 10 screwed on the are threaded sockets 22 of the anchors 20. This assembling step varies dependent of what kind of anchors 20 are used. The bracket itself is pushed on the mounting bolts 10 by guiding the mounting bolts 10 through the sleeves 11. The position of the bracket is adjusted by setting the second support nut 14 on such a level that the planar face 12 is set against the roofing felt 19. Now the bracket rest on the second support nuts 14. First support nuts 13 are fastened on the first contact surfaces 8 of the bracket on top of the body 2. This kind of assembly fixes the bracket securely on a desired position and prevents the bracket to be pushed against the roofing felt 19 and the thermal insulation layer 18. The planar face 12 is firmly against the roofing felt 19 proving bases for a good seal against the roofing felt 19. An example of the sealing structure is described further below.

The static and dynamic stresses are conducted by the mounting bolts 10 to a structural body. The bracket is held securely on the mounting bolts 10 by the first and second support nuts 13, 14. As the lead-ins on the roof are protected by the body 2 and the plate 1 of the bracket, the structure can be secured against leakage. The holes 7 in the sleeves 11 can be sealed with a sealant, if desired, for further leak-proofing.

The planar face 12 can be optionally fixedly covered with a felt. The felt is set fast and tidy over the planar face 12. At the edges the felt may extend slightly over the boundary of the plate 1. This allows working on the edge of the felt 15 when the bracket is mounted on a roof. The felt is preferably permanently fixed on the planar face 12. Thus, the felt provides a solid fixing element. The felt may be roofing felt normally used in roofs. In such case, it can be fixed on the planar face 12 by heating the bituminous additive of the felt. Alternatively, a felt having only fibrous body component could be used. Then the felt would be attached by using a glue or similar fixing agent. Glue may be used in connection with the bituminous felt as well, if desired.

The mounting bolts provide also a mounting fixture for equipment that is to be mounted on a roof or similar location. In this example, the mounting bolts 10 are threaded rods that have a continuous tread over their whole length. This allows for full adjustment of the location of the bracket in relation to the structures of the roof. A mounting fixture 23 for solar panels or other equipment can be fixed in a similar way on a desired height in relation to the top of the roof by mounting nuts 24 that are turned on a desired level on the mounting bolts 10. The mounting fixture 23 is secured between two mounting nuts 24 set on either side of the mounting fixture 23. The type and design of he mounting fixture is not limited by the construction of the bracket.

In addition to mounting solar panels, the bracket may used for mounting a cable tray, a catwalk or a walkway. The bracket can carry high loads, dependent of its dimensions and security of the mounting point. Such loads may be caused by weight of the equipment, wind loads, snow and such. The securing is made on the structure of the roof or other surface the bracket is mounted on. In practise these structures are girders, support beams of the roof or other load bearing structure supporting the weatherproofing layer of the roof. The materials of these support structures are most commonly wood, metal or concrete, but the securing method is not selective of the material.

The body of the bracket and the plate are one single piece manufactured of plastic by normal plastic casting method. Other parts are the felt and accessories such bolts of metal, or any suitable material. The seams, holes, bolts etc may be sealed or secured by glue or sealant, if so desired. The type of fasteners may be altered. The bolts may be replaced by fixed nuts and only one bolt or not may be provided. However, the structure having two bolts provides steady and flexible mount as described above, Further, clamps and such may be used but they are usually more complicated to build and use.

The mounting method of the bracket is simple. It involves measuring the correct place for the bracket, whereafter mounting bolts are attached to the anchors or directly on a support structure. As mentioned earlier, the mounting bolts may be premounted, for example if they are cast fixedly in a concrete supporting the roof. After fixing the mounting bolts, the bracket can be attached on the bolts as described above.

If a felt between the planar face and the roofing felt is used, at least one of the felt surfaces of the roof or the felt is heated to melt the heat melt fixing agent, usually bitumen. If heating of the roof felt is sufficient to provide enough melted fixing agent, the felt of the bracket may be only fibre base without fixing agent. Also, bitumen or another fixing agent may be added either on the top of the roof or the felt to ensure fixing. However, the invention allows mounting without added substances, whereby method limited to heating one or two of the surfaces is preferable. After heating and melting the fixing agent, the bracket is pressed on the roof and let cool for setting the fixing agent.

A piece of felt 25 having a hole for the body 2 can be set on top of the second surface 4 so that it extends the edges of the plate. The piece of felt 25 secures further the water tightness of the mounting.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention is suitable for mounting equipment on a roof.

### REFERENCE SIGNS LIST

- 1: plate
- 2: body
- 3: first surface
- 4: second surface
- 5: top face
- 6: cavity
- 7: hole
- 8: first contact surface
- 9: second contact surface
- 10: mounting bolt
- 11: sleeve
- 12: planar face
- 13: first support nut
- 14: second support nut
- 15: brace
- 16: support point
- 17: hollow core slab
- 18: thermal insulation layer
- 19: roofing felt
- 20: anchor
- 21: fixing screw
- 22: threaded socket
- 23: mounting fixture
- 24: mounting nut
- 25: piece of felt

## Claims

1. A bracket for attaching equipment on a roof, comprising:
- a plate (1) having a first surface (3) and a second surface (4);
- a body (2) placed on the second surface (4) and extending from it and having a top face (5), the body (2) having a cavity (6) within; and
- the first surface (3) of the plate (1) forms a planar face (12) facing in opposite direction to the second surface (4);
**characterized in that**
- the body (2) comprises a sleeve (11) having a hole (7) within, the hole (7) extending from the top face (5) of the body (2) into the cavity (6) of the body (2) within the sleeve (11);
- a first contact surface (8) around the hole (7) on the top face (5) of the body (2);
- a second contact surface (9) around the hole (7) on an end surface of the sleeve (11) placed in the cavity (6) of the body (2); and
- at least one reinforcement brace (15) extending from the inner face of the cavity (6) of the body (2) to the sleeve (11).

2. A bracket according to one of the claims 1, wherein the bracket comprises a reinforcement brace structure comprising several braces (15).

3. A bracket according to one of the claims 1 - 2 wherein the cavity (6) of the body (2) opens on the planar face (12) to provide access inside the cavity (6).

4. A bracket according to one of the claims 1 - 3, wherein the bracket comprises at least two sleeves (11) and the reinforcement brace structure is configured to extend between the sleeves (11).

5. A bracket according to one of the claims 1 - 4, wherein the brace structure is configured to form a support point (16) on the level of the planar face (12).

6. A bracket according to one of the previous claims, wherein the bracket comprises a mounting bolt (10) having an anchoring end and a thread on the end opposite to the anchoring end, wherein the mounting bolt (10) is configured to extend through the hole (7) in the sleeve (11) and has a first support nut (13) configured to be set against the first contact surface (8) and a second support nut (14) configured to be set against the second contact surface (9).

7. A bracket according to one of the previous claims, the bracket comprises a mounting fixture (23) configured to be mounted on the mounting bolts (10) to support equipment and devices, such as solar panels.

8. A bracket according to the claim 7, wherein the anchoring end of the mounting bolt (10) comprises a thread configured for fixing the mounting bolt (10) to an anchor (20).

9. A bracket according to one of the claims 7 - 8, wherein the planar face (12) is covered with a felt permanently fixed thereto.
